# EUROPEAN PATENT SPECIFICATION

(11) **EP 0 882 404 B1**
(45) Date of publication and mention of the grant of the patent: **18.09.2002**
(21) Application number: 98201468.0
(22) Date of filing: 06.05.1998
(51) Int. Cl.: A22C 17/04

(54) **Compact automatic machine for performing the boning cut on legs of ham**
Automatische Maschine zum Ausbeinen von Schenkeln
Machine automatique de désossage des jambes de jambon

(30) Priority: 19.05.1997 IT MI971163
(43) Date of publication of application: 09.12.1998
(73) Proprietor: MBA S.r.l., Rubiera (Reggio Emilia) (IT)
(72) Inventor: Guerze, Wainer, Modena (IT); Biasetti, Marco, Rubiera (Reggio Emilia) (IT); Panciroli, Luciano, Rubiera (Reggio Emilia) (IT)
(74) Representative: Modiano, Guido, Dr.-Ing.

(56) References cited:
- EP-A- 0 443 101
- EP-A- 0 502 581
- EP-A- 0 753 260
- FR-A- 2 642 614

## Description

The present invention relates to a compact automatic machine for performing the boning cut on legs of ham.

It is known that the production of legs of ham ready for cutting by the butcher and/or the consumer involves several stages of preparation, including extraction of the bone which is left inside the leg of ham during maturing and elimination of the so-called hip, i.e. that part of the animal's pelvis which is left attached to the leg of ham so as to ensure occlusion of the femoral vein.

It is also known that these delicate processing stages are currently performed for the most part manually and therefore depend on the operator's ability as well as his physical characteristics and his strength, which are important since these operations are extremely tiring. On the other hand, since boning is carried out with perfectly sharpened blades (referred to as "gouges" whence the term "gouging" for the cutting operation), it is also known that this operation is dangerous and involves the risk of injuries.

In the art, machines for the semi-automatic boning of legs of ham are also known, said machines being based on the use of milling tools which, however, are not suitable for the purpose since since the high speed of rotation of the milling cutter on the one hand causes burning of the leg of ham and dispersion of splinters of bone which remain stuck in the meat of the leg itself.

In order to provide a solution to said problems, an automatic machine for gouging and cutting the hip bone has also been realized, as disclosed by the publication in EP 0,753,260 in the name of the present proprietors, said machine comprising at least one fixed frame and at least one carriage for supporting the leg of ham, provided with means for gripping and centring the bone of the leg of ham and moved by associated feeding means, there also being provided at least one station for loading the leg of ham onto said carriage and for front upper and lower gouging, at least one station for lateral gouging, at least one station for lateral gouging on the side where the hip is, at least one station for cutting the hip and at least one station for unloading the leg of ham from the carriage.

This machine, although functioning well for the preset purposes, has certain drawbacks, however, due to the fact that the variety of shapes of the legs of ham, which may be of the right-hand or left-hand type, and the different dimensions thereof result in a different spatial position of the end of the femoral bone, with the consequent need for adjustments to the position of the cutting tools.

In addition to this, said machine is extremely bulky on account of the division of the processing operations carried out in succession at stations arranged alongside each other in the longitudinal direction of the machine.

A further example of gouging/cutting machine is disclosed in FR-A-2 642 614, on which the preamble of claim 1 is based.

The technical problem which is posed therefore is that of providing a machine for the gouging of legs of ham which is totally automatic, does not cause any damage to the leg of ham, ensures a high productivity and high level of safety for the operators and allows both right-hand and left-hand legs of ham to be processed, independently of their size and the consequent different position of the end of the bone in relation to the support or reference surface.

Within the scope of this problem it is also required that the machine should use chipless cutting tools so as to avoid the dispersion of fragments of bone and the like and should have smaller overall dimensions so as to limit the assembly, packaging and despatch costs.

These problems are solved according to the present invention by an automatic machine with the features of claim 1.

In a preferred embodiment there are also provided devices for adjusting the height of the end of the bone relative to a predetermined reference axis.

Further details may be obtained from the following description of a non-limiting example of embodiment of the invention, provided with reference to the accompanying drawings, in which:
Figure 1 shows a plan view of the machine according to the invention;

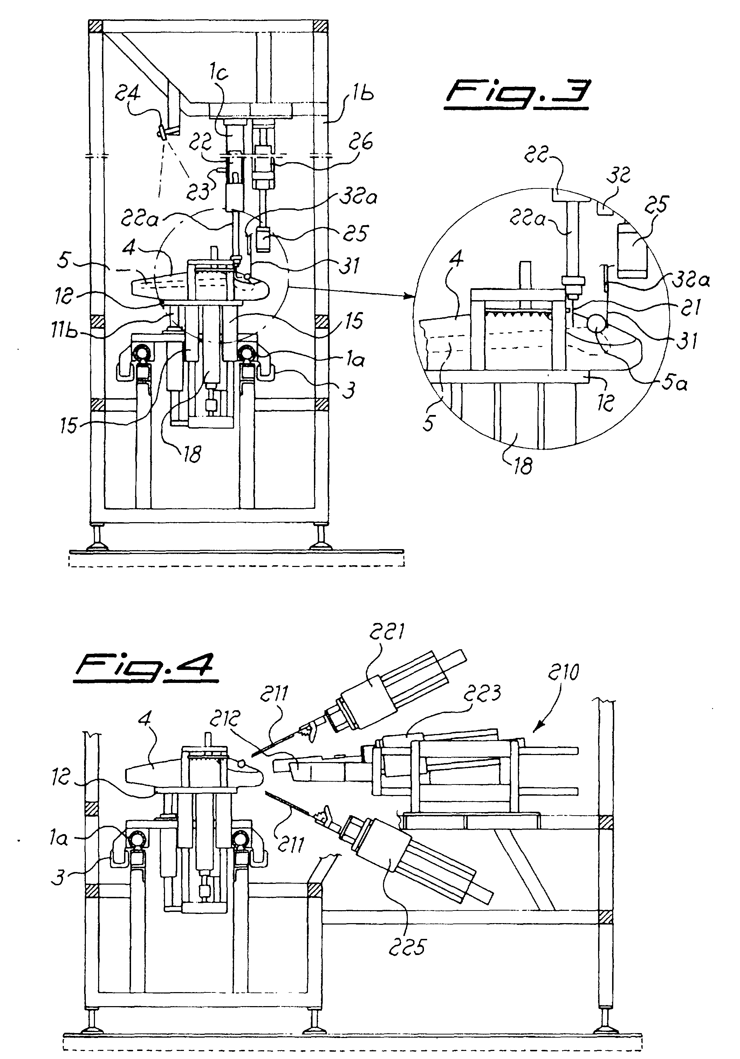

Figure 2 shows a plan view of the detail of the carriage supporting the leg of ham;
Figure 2a shows a front view, along "A", of the carriage according to Fig. 2;
Figure 3 shows a cross-section along the plane indicated by III-III in Fig. 1, illustrating the station for loading the leg of ham;
Figure 4 shows a cross-section along the plane indicated by IV-IV in Fig. 1, illustrating the station for gouging the leg of ham;
Figure 5 shows a side view of the detail of the gouging station;
Figure 6 shows a view, on a larger scale, of the detail of the means for moving the gouge;
Figure 7 shows a top view of a variation of an example of embodiment of the machine according to the invention; and
Figure 7a shows a schematic cross-section along the plane indicated by VIIa-VIIa in Fig. 7.

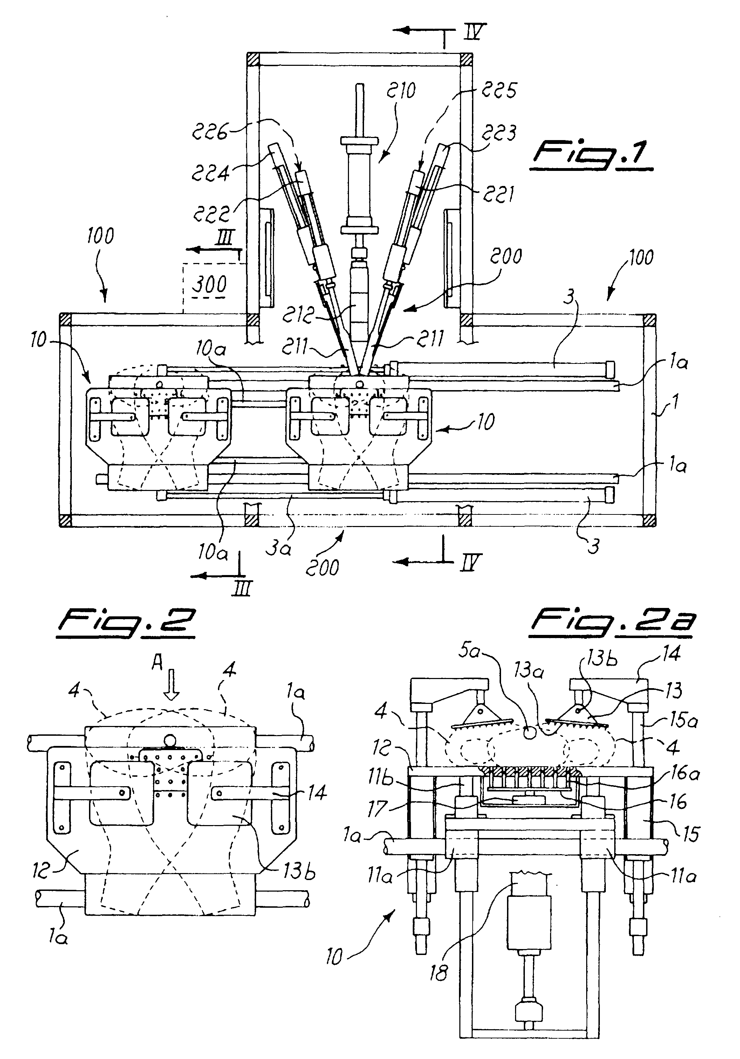

As shown in Figure 1, the machine for gouging legs of ham according to the invention is composed of a tubular support frame 1, comprising internally three work stations, i.e. respectively, a loading/unloading station 100 and a gouging station 200 which alternate with respect to one other and are located at a suitable and predetermined relative distance.

Said frame 1 also has, arranged inside it, two horizontal parallel guides 1a which support a pair of carriages 10 which are joined together in the longitudinal direction by means of connecting rods 10a which define the relative distance thereof so that each carriage 10 is located centred at a loading/unloading station when the other one is centred opposite the gouging station.

Said carriages 10 are made to perform a translatory movement by an actuating device consisting of a pair of cylinders 3 which are arranged parallel to said guides 1a and the rod 3a of which is joined to one of the said carriages 10 so that the alternate positioning of the said carriage in one of the work stations draws the other carriage into the station left free by the preceding one. In addition to this, the connecting rods allow a relative movement, in the vertical direction, of the carriages so that each of them may be raised or lowered in relation to the other one.

Each carriage 10 essentially consists of an intermediate surface 11 which have, integral with them, lower sliding bearings 11a, sliding on the guides 1a, and upper columns 11b forming a bottom end-of-travel stop for an upper surface 12 supporting the leg of ham 4.

The entire surface 12 is joined to the rod 18a of a cylinder 18 fixed to the surface 11 and is therefore movable in a vertical direction owing to the actuating and control action of a device 20 for controlling and adjusting the vertical position of the leg of ham relative to a predetermined reference surface.

The carriage 10 also has two upper plates 13 provided with teeth 13a and supported by a pivot 13b about which they are able to rotate so as to adapt themselves to the irregular shape of the upper part of the leg of ham; said pivot is in turn supported by an arm 14 mounted on the rod 15a of a cylinder 15, fixed perpendicularly to the surface 12 supporting the leg of ham.

In this way, the plates 13 may be recalled towards the leg of ham 4 so as to exert a pressure thereon, designed to hold it firmly for the next processing operation.

Said working surface 12 also has, passing through it, teeth 16a integral with a surface 16 which is made to perform a translatory movement by a cylinder 17 which is in turn joined to the surface 12, from an loading/unloading position, with the teeth retracted into the surface, to a position where it engages with the leg of ham, with the teeth emerging from the surface itself.

In the region of the loading and unloading station 100 there is also provided a device 30 for adjusting the more or less advanced position of the leg of ham 4 on the support surface 12, which consists of a flange 31 integral with the rod 32a of a cylinder 32 fixed to the frame 1b.

Before loading the leg of ham, said flange 31 is lowered so that the leg of ham stops in abutment against it.

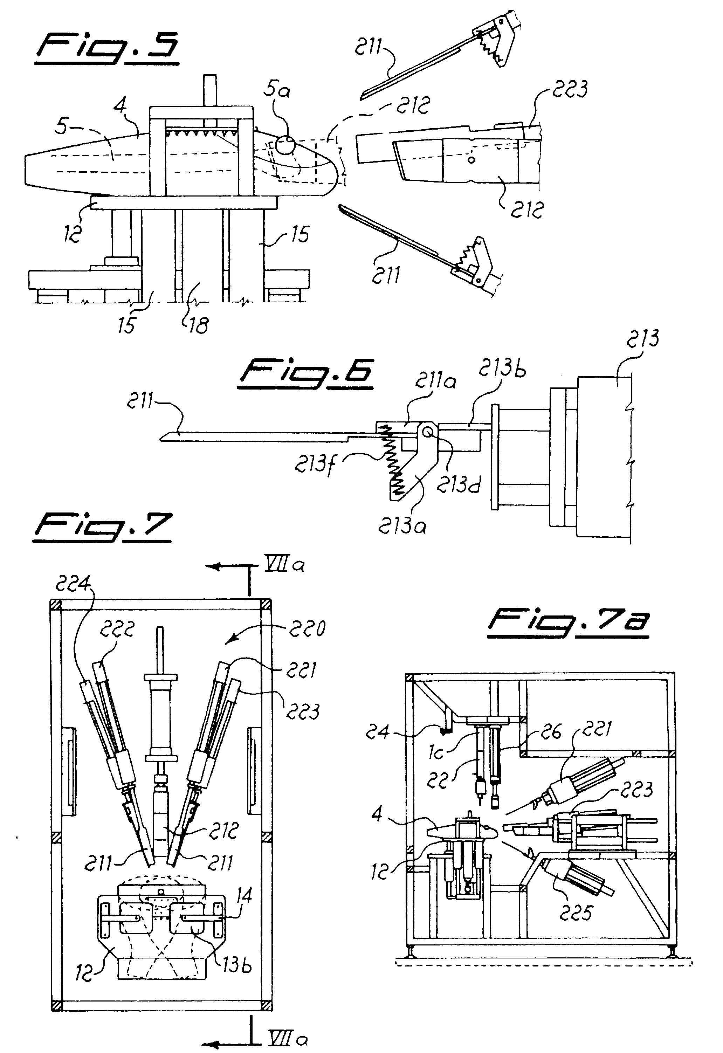

The said device 20 for adjusting the height of the leg of ham (Fig. 3) consists of a blade 21 which is integral with the rod 22a of a pneumatic cylinder 22 fixed to a vertical guide lc of the frame 1.

The said cylinder 22 has associated with it an element for detecting the passing movement of the rod 22a, which, in the example of the figure, is schematically shown as a microswitch 23.

Said cylinder 22 is subject to a balanced pressure so as to allow entry of the blade 21 into the leg of ham 4 and stoppage thereof when it comes into contact with the femoral bone 5 which offers a greater resistance than the meat.

Said adjustment in the vertical direction allows the end 5a of the femoral bone 5 of the leg of ham 4 to be positioned correctly in relation to the cutting tools whatever the size of the leg of ham.

Said device 20 for positioning the leg of ham also has a low-power (laser or similar) light emitter 24 which is integral with the frame 1 and the light beam of which is reflected on the support surface 12, forming the axis of orientation along which the bone of the leg of ham is arranged.

Since this ray may be adjusted angularly, it is possible to ensure the perfect parallel arrangement of said axis with the reference axis of the machine which is formed by the longitudinal axis of the imprinting blade described below.

Since, during processing, there is also the need to compress slightly the front and central part of the leg of ham 4, the loading/unloading station also has a plunger 25 which is guided and operated by a cylinder 26, actuation of which is performed automatically.

Once the leg of ham has been loaded and positioned correctly, the cylinders 3 are actuated so as to bring the carriage 10, loaded, opposite the gouging station where a first imprinting operation is performed, together with the subsequent upper, lower and lateral gouging operations on both sides.

Said so-called "imprinting" operation consists in performing a circular incision around the end section 5a of the bone 5 of the leg of ham 4, which is obtained by means of an associated imprinting group 210 which has a cylinder 213 designed to actuate the translatory movement of a hollow cylindrical blade 212 which is provided with faces at angle of 15° and which, penetrating into the leg of ham 4 concentric with the bone, causes an incision (impression) in the vicinity of the femoral end 5a; the latter, being angled with respect to the bone, is cut by the passing movement of the imprinting blade, facilitating the subsequent entry of the gouging blades.

It is therefore obvious how said imprinting blade forms the reference axis for all the subsequent cuts and how, in relation to this axis, both the cutting blades and the bone of the leg of ham must be oriented at the time of unloading onto the carriage 10.

Once the imprinting incision has been made it is possible to start the actual boning cut performed by means of the gouging head 220 which comprises six cutting groups 221, 222, 223, 224, 225, 226 symmetrically arranged with respect to the bone 5.

More particularly:
- two cutting groups 221 and 222 are arranged above the surface supporting the leg of ham and inclined downwards, along a vertical plane, of about 27/30° with respect to the surface 12 supporting the leg of ham; these cutting groups perform upper cutting;
- two cutting groups 223 and 224 are arranged substantially in alignment with the said surface 12 with respect to which they are inclined at about 5/7°; these cutting groups perform lateral gouging;
- two lower groups 225,226 inclined at about 15/25°; these cutting groups perform lower gouging.

All the aforementioned groups essentially consist of a cylinder 213, the rod of which carries the cutting tool 21 (gouge).

Said cutting groups work alternately in pairs so as not to interfere with the others and, over the first travel section, follow the imprinting blade 212, while over the final travel section they are able to follow the bone owing to a compensating device arranged between the blade 211 and the rod of the cylinder 213 and essentially consisting (Fig. 6) of an arm 213a fixed to the end of the rod 213b of the cylinder 213 and carrying a pivot 213d on which the blade-carrying device 211a is hinged with the intervening arrangement of a spring 213f; in this way the blade 211 may therefore rotate angularly so as to follow the profile of the bone during its penetrating movement into the leg of ham.

The load of the spring 213f is established on the basis of the different working requirements since the gouging quality is assessed on the basis of the quantity of meat which remains attached to the bone at the moment of its extraction from the leg of ham.

The machine operates in the following manner:
- at the start of cycle, one carriage 10 of the machine is located opposite the gouging station 200 and the other carriage in one of the two loading/unloading stations 100;
- the latter carriage is struck by the light beam of the emitter 24 which has previously been oriented parallel to the axis of the imprinting blade, so as to allow the operator to align the bone with ray which is visible on the surface independently of whether it is a right-hand or left-hand bone; at the same time the stop flange 31 is lowered so that the position of the leg of ham along the axis parallel to the bone is the same independently of the size of the leg of ham itself.

The cylinders 15 which recall the arms 14 are then actuated, causing at the same time the teeth 16a to emerge so as to fix the leg of ham to the support surface 12;
- once the leg of ham 4 has been fixed in position, the device for adjusting the position of the bone in the vertical direction is activated.

For this purpose, lowering of the blade 21 is activated so as to bring it into its bottom end-of-travel position; at this point the surface 12 is raised until the leg of ham is penetrated by the blade which remains at a standstill (owing to calibration of the pressure inside the cylinder 22) until it comes into contact with the bone 5 which, offering greater resistance than the meat, causes the blade 21 and hence the rod 22a of the cylinder to move upwards again until said rod is detected by the sensor 23 which sends a signal blocking travel of the rod itself.

In this way the bone 5 of the leg of ham is brought to the predetermined working height irrespective of the size of the leg of ham.

Finally the plunger 25 is lowered so as to compress slightly the end of the leg of ham;
- once the blocking operations have been performed and the leg of ham has been positioned, the cylinders 3 are actuated so as to cause the forward movement of the carriage 12, loaded, towards the cutting station 200; this forward movement causes also displacement of the other carriage from the cutting station 200 to the other unloading/loading station.

During transfer, the support surface 12 of the carriage with the already processed leg of ham loaded is brought back into its bottom end of travel position so as to allow unloading of the leg of ham which has already been cut and loading of another leg of ham to be boned;
- when the first carriage 12 has reached the cutting station 200 the imprinting head is operated causing penetration of the associated blade 212 into the leg of ham and the cutting cycle is started in accordance with the following sequence:

- upper gouging alternately on the right and left;
- lateral gouging on both sides simultaneously;
- lower gouging alternately on the right and left.

Once cutting has been completed, the imprinting blade is retracted, the surface 12 of the carriage is lowered again and the cylinders 3 are operated again in the direction opposite to the previous one, so as to cause the translatory movement of the pair of carriages 12 and convey the cut leg of ham to the free unloading/loading station and the carriage with the leg of ham to be cut to the cutting station.

It is therefore obvious how the alternating movement of the pair of carriages enables one to have always a cut leg of ham in one of the two loading/unloading stations 100 and a leg of ham which is yet to be cut at the cutting station 200.

As illustrated in Figures 7 and 7a, it is also envisaged that the machine may be realized with a single fixed carriage 12 at the cutting station which, in such a case, coincides with the loading/unloading station.

This configuration, in addition to reducing further the dimensions, also obviously dispenses with the need for the installation of devices for guiding and moving the carriages 12, obviously to the detriment of the productivity of the machine, which is obviously reduced by the need to stop the cutting station 200 for the whole of the time necessary for unloading and reloading the carriage.

It is also envisaged that these loading/unloading operations may be performed by means of associated automatic devices, as a result of which the presence of the operator attending the machine may be dispensed with.

Control, operation and synchronisation of the movements may all be obtained by means of programming devices indicated schematically by 300 in Fig. 1.

In addition, it is envisaged that the emitter of the light beam for orientation of the bone of the leg of ham may consist of a device for detecting the position of the bone, associated with a device for angular adjustment of the surface 12 which in this case, in addition to being movable in a direction perpendicular to the fixed surface 11, is also movable angularly.

Owing to interruption of the beam by the femoral bone 5 it is possible to determine the exact angular position in relation to the working axis of the machine and actuate the device for alignment of the bone with the working axis.

In this way the operation of positioning the leg of ham on the carriage would become entirely automatic and independent of the operator's skill.

## Claims

1. Automatic machine for performing the boning cut on the bone (5) of legs of ham (4) or the like, comprising a frame (1) containing at least one loading station (100) and at least one cutting station (200) provided with a plurality of cutting groups (221, 222, 223, 224, 225, 226) for cutting the leg of ham (4), supporting means (12) for supporting the leg of ham (4) which can be positioned at the loading/unloading station and/or cutting station and which are provided with devices (13, 14) for retaining the leg of ham (4), **characterized in that** it further comprises alignment adjusting means (24) for adjusting the alignment of the bone (5) by forming an axis of orientation along which the bone (5) of the leg of ham is arranged for support at said supporting means (12), said cutting station (200) being further provided with an imprinting group (210) adapted for imprinting operations.

2. Machine according to Claim 1, **characterized in that** said means (12) for supporting the leg of ham (4) consist of a carriage (10) supported by guides (1a) fixed to the frame of the machine.

3. Machine according to Claim 2, **characterized in that** said carriage (10) is formed by a first surface (11) carrying means (11a) for coupling with said guides (1a) and by a second surface (12) which is parallel to the first one and movable in a direction perpendicular to the latter, by means of the action of actuating means (18), and which act on the supporting means (12) supporting the leg of ham (4).

4. Machine according to Claims 1 or 3, **characterized in that** said supporting means for supporting the leg of ham (4) comprise said second support surface (12) to which actuation means (15, 15a) for actuating the retaining devices (13, 14) for retaining the leg of ham are connected.

5. Machine according to Claims 1 or 4, **characterized in that** said retaining devices comprise retaining plates (13) which are provided with teeth (13a) extending from their bottom surface, said plates (13) being pivotably mounted on a respective pivot (13b) integral with said actuating means (15, 15a).

6. Machine according to Claims 4 or 5, **characterized in that** said actuating means consist of a cylinder (15) fixed to the support surface (12), the rod (15a) of which carries said pivot (13b).

7. Machine according to Claims 3 or 4, **characterized in that** said support surface (12) has, associated with it, further retaining means (16) for retaining the leg of ham (4), consisting of teeth (16a) which are arranged inside corresponding seats inside the support surface (12) supporting the leg of ham and which can be actuated translationwise via associated actuating means (17) from a position retracted inside said support surface (12) into a position protruding from the support surface itself.

8. Machine according to Claims 2 or 3, **characterized in that** said loading station (100) is adapted to act as loading/unloading station (100) which comprises means for adjusting the height of the bone (5) of the leg of ham with respect to a reference surface.

9. Machine according to Claim 8, **characterized in that** said means for adjusting the height of the bone (5) consist of a blade (21) integral with the rod (22a) of a pneumatic cylinder (22) fixed to a vertical guide (1c) of the frame (1).

10. Machine according to Claim 9, **characterized in that** said pneumatic cylinder (22) is subject to balanced pressure so as to allow stoppage of the blade (21) when the latter comes into contact with the femoral bone (5).

11. Machine according to Claims 3, 4, 6 , 7 or 9, **characterized in that** said means for adjusting the height also comprise an element (23) for detecting the position of the leg of ham, which is designed to send a stop signal to said actuating means (18) effecting translation of the support surface (12) supporting the leg of ham.

12. Machine according to Claim 8, **characterized in that** said alignment adjusting means (24) are provided at said loading/unloading station (100), said orientation axis being is substantially perpendicular to the direction of the support guides (1a) of the carriage (12).

13. Machine according to Claims 4 or 12, **characterized in that** said means for alignment of the bone consist of a low-power light emitter (24) which is integral with the frame (1) and emits a light beam which is projected onto the support surface (12) supporting the leg of ham (4) so as to form said orientation axis.

14. Machine according to Claim 8, **characterized in that** said loading/unloading station comprises means (25) for compression of the front part of the leg of ham (4).

15. Machine according to Claim 14, **characterized in that** said compression means consist of a plunger (25) actuated so as to perform a translatory movement perpendicular to the surface (12) supporting the leg of ham by associated actuating means (26).

16. Machine according to Claim 1, **characterized in that** said cutting station (200) comprises one imprinting head (212) and a plurality of gouging heads arranged in pairs adapted to work alternatively so as to avoid mutual interference.

17. Machine according to Claim 16, **characterized in that** said imprinting head is provided with a blade (212) which is substantially cylindrical and hollow and actuated so as to perform a translatory movement by associated actuating means (213).

18. Machine according to Claims 1 or 17, **characterized in that** said cutting groups comprise a pair of upper gouging heads (221, 222), a pair of lower gouging heads (223, 224) and a pair of front gouging heads (225, 226), respectively.

19. Machine according to Claim 18, **characterized in that** said cutting heads are suitably angled with respect to the orientation axis of the bone (5) of the leg of ham, namely with respect to the reference axis of the machine.

20. Machine according to Claim 8, **characterized in that** said loading/unloading station (100) coincides with the cutting station (200).

21. Machine according to Claim 8, **characterized in that** it comprises two loading/unloading stations (100) symmetrically arranged on opposite sides of the cutting station (200).

22. Machine according to Claims 8 or 21, **characterized in that** it comprises a pair of carriages (10) supporting the leg of ham (4), which are movable in translation alternately from a position corresponding to one of the two loading/unloading stations (100) to the cutting stations (200) by means of the action of associated carriage actuating means (3).

23. Machine according to Claim 22, **characterized in that** said carriages (10) are connected together in the longitudinal direction by a pair of connecting rods (10a).

24. Machine according to Claim 22, **characterized in that** said carriage actuating means consist of a pair of cylinders (3) which are arranged parallel to the guides (1a) of the carriages (10).

25. Machine according to Claim 1, **characterized in that** it further comprises angular adjustment means , associated with said support surface (12) for angular adjustment thereof with respect to the reference axis of the machine.

26. Machine according to Claims 1 and 25, **characterized in that** it comprises light-emitting means for detecting the position of the femoral bone with respect to the reference axis, which are designed to emit control signals for the said devices for angular adjustment of the surface (12), depending on the actual position of the bone relative to said reference axis.

27. Machine according to Claim 1, **characterized in that** it comprises a device (30) for adjusting the more or less advanced position of the leg of ham (4) on the support surface in a direction parallel to the axis of the bone (5), which consists of an abutment flange integral with the rod (32a) of a cylinder (32) fixed to the frame (1b).

28. Method for performing the boning cut on the bone (5) of legs of ham (4) or the like carried out on a machine according to any of the claims 1-27, comprising the steps of:
- supporting a leg of ham, at a station for loading/unloading, on supporting means with the bone aligned along an orientation axis formed by way of alignment adjusting means;
- arrange said supporting means with said leg of ham supported thereon at a cutting station comprising imprinting and cutting groups;
- carrying out an imprinting operation with said imprinting group which consists in performing a circular incision around the end section (5a) of the bone (5);
- performing the boning cut by way of said cutting groups; and
- unload the processed leg of ham from said supporting means.

## Patentansprüche

1. Automatische Maschine zum Durchführen des Ausbeinschnitts am Knochen (5) von Schinkenkeulen (4) oder dergleichen, mit einem Rahmen (1), der zumindest eine Ladestation (100) und zumindest eine Schneidstation (200) mit mehreren Schneidgruppen (221, 222, 223, 224, 225, 226) zum Schneiden der Schinkenkeule (4) hat, Tragemitteln (12) zum Tragen der Schinkenkeule (4), die an der Lade-/Abladestation und/oder an der Schneidstation angeordnet werden können und mit Vorrichtungen (13, 14) zum Festhalten der Schinkenkeule (4) versehen sind, **dadurch gekennzeichnet, daß** sie ferner Ausrichtungseinstellmittel (24) zum Einstellen der Ausrichtung des Knochens (5) durch Bilden einer Orientterungsachse enthält, an der der Knochen (5) der Schinkenkeule zum Trägen an den Tragemitteln (12) ausgerichtet wird, wobei die Schneidstation (200) femer eine Prägegruppe (210) enthält, die für Prägeoperationen geeignet ist.

2. Maschine nach Anspruch 1, **dadurch gekennzeichnet, daß** die Mittel (12) zum Tragen der Schinkenkeule (4) aus einem Schlitten (10) bestehen, der von an dem Rahmen der Maschine befestigten Führungen (1a) gehalten ist.

3. Maschine nach Anspruch 2, **dadurch gekennzeichnet, daß** der Schlitten (10) von einer ersten Fläche (11), die Mittel (11a) zum Koppeln an die Schienen (1a) trägt, und einer zweiten Fläche (12) gebildet ist, die parallel zur ersten ist und in einer Richtung senkrecht zu dieser durch die Wirkung von Betätigungsmitteln (18) bewegbar ist, die auf die Tragemittel (12) einwirken, die die Schinkenkeule (4) tragen.

4. Maschine nach den Ansprüchen 1 oder 3, **dadurch gekennzeichnet, daß** die Tragemittel zum Tragen der Schinkenkeule (4) die zwelte Tragefläche (12) enthalten, an der Betätigungsmittel (15, 15a) zum Betätigen der Festhaltevorrichtungen (13, 14) zum Festhalten der Schinkenkeule befestigt sind.

5. Maschine nach den Ansprüchen 1 oder 4, **dadurch gekennzeichnet, daß** die Festhaltemittel Festhalteplatten (13) enthalten, die von ihrer Unterseite abstehende Zähne (13a) haben, wobei die Platten (13) schwenkbar an einem jeweiligen Zapfen (13b) angebracht sind, der einstückig mit den Betätigungsmitteln (15, 15a) ist.

6. Maschine nach den Ansprüchen 4 oder 5, **dadurch gekennzeichnet, daß** die Betätigungsmittel aus einem Zylinder (15) bestehen, der an der Tragefläche (12) befestigt ist und dessen Stange (15a) den Zapfen (13b) trägt.

7. Maschine nach den Ansprüchen 3 oder 4, **dadurch gekennzeichnet, daß** die Tragefläche (12) weitere ihr zugeordnete Festhaltemittel (16) zum Festhalten der Schinkenkeule (4) hat, die aus Zähnen (16a) bestehen, die in entsprechenden Sitzen in der die Schinkenkeule tragenden Tragefläche (12) angeordnet sind und über zugehörige Betätigungsmittel (17) translatorisch aus einer in die Tragefläche (12) eingezogenen Stellung in eine aus der Tragefläche selbst hervorstehenden Stellung betätigt werden können.

8. Maschine nach den Ansprüchen 2 oder 3, **dadurch gekennzeichnet, daß** die Ladestation (100) geeignet ist, als Lade-/Abladestation (100) zu fungieren, die Mittel zum Einstellen der Höhe des Knochens (5) der Schinkenkeule bezüglich einer Referenzfläche hat.

9. Maschine nach Anspruch 8, **dadurch gekennzeichnet, daß** das Mittel zum Einstellen der Höhe des Knochens (5) aus einer Klinge (21) besteht, die einstückig mit der Stange (22a) eines Pneumatikzylinders (22) ist, der an einer vertikalen Führung (1c) des Rahmens (1) befestigt ist.

10. Maschine nach Anspruch 9, **dadurch gekennzeichnet, daß** der Pneumatikzylinder (22) Gleichdruck ausgesetzt ist, um das Anhalten der Klinge (21) zu ermöglichen, wenn diese mit dem Oberschenkelknochen (5) in Kontakt tritt.

11. Maschine nach den Ansprüchen 3, 4, 6, 7 oder 9, **dadurch gekennzeichnet, daß** die Mittel zum Einstellen der Höhe ferner ein Element (23) zum Erfassen der Position der Schinkenkeule enthalten, das dazu dient, ein Stoppsignal an das Betätigungsmittel (18) zu senden, das die Translation der die Schinkenkeule tragenden Tragefläche (12) bewirkt.

12. Maschine nach Anspruch 8, **dadurch gekennzeichnet, daß** die Ausrichtungseinstellmittel (24) an der Lade-/Abladestation (100) angeordnet sind, wobei die Orientierungsachse im wesentlichen senkrecht zur Richtung der Halteführungen (1a) des Schlittens (12) liegt.

13. Maschine nach den Ansprüchen 4 oder 12, **dadurch gekennzeichnet, daß** die Mittel zum Ausrichten des Knochen aus einem Lichtsender geringer Leistung (24) besteht, der einstückig mit dem Rahmen (1) ist und einen Lichtstrahl aussendet, der auf die die Schinkenkeule (4) tragende Tragefläche (12) projiziert wird, um die Orlentierungsachse zu bilden.

14. Maschine nach Anspruch 8, **dadurch gekennzeichnet, daß** die Lade/Abladestation Mittel (25) zum Pressen des Vorderteils der Schinkenkeufe (4) enthält.

15. Maschine nach Anspruch 14, **dadurch gekennzeichnet, daß** die Preßmittel aus einem Preßkolben (25) bestehen, der durch zugehörige Betätigungsmittel (26) derart betätigt wird, daß er eine translatorische Bewegung senkrecht zu der die Schinkenkeule tragende Fläche (12) ausführt.

16. Maschine nach Anspruch 1, **dadurch gekennzeichnet, daß** die Schneidstation (200) einen Prägekopf (212) und mehrere paarweise angeordnete Aushöhlköpfe enthält, die geeignet sind, abwechselnd zu arbeiten, um eine gegenseitige Beeinträchtigung zu vermeiden.

17. Maschine nach Anspruch 16, **dadurch gekennzeichnet, daß** der Prägekopf eine Klinge (212) hat, die im wesentlichen zylindrisch und hohl ist und durch zugehörige Betätigungsmittel (213) derartig betätigt wird, daß sie eine translatorische Bewegung ausführt.

18. Maschine nach den Ansprüchen 1 oder 17, **dadurch gekennzeichnet, daß** die Schneidgruppen jeweils ein Paar obere Aushöhlköpfe (221, 222), ein Paar untere Aushöhlköpfe (223, 224) und ein Paar vordere Aushöhlköpfe (225, 226) enthalten.

19. Maschine nach Anspruch 18, **dadurch gekennzeichnet, daß** die Schneidköpfe bezüglich der Orientierungsachse des Knochens (5) der Schinkenkeule, nämlich bezüglich der Bezugsachse der Maschine geeignet abgewinkelt sind.

20. Maschine nach Anspruch 8, **dadurch gekennzeichnet, daß** die Lade/Abladestation (100) mit der Schneidstation (200) zusammenfällt.

21. Maschine nach Anspruch 8, **dadurch gekennzeichnet, daß** sie zwei Lade/Abladestationen (100) enthält, die auf einander abgewandten Seiten der Schneidstation (200) symmetrisch angeordnet sind.

22. Maschine nach den Ansprüchen 8 oder 21, **dadurch gekennzeichnet, daß** sie zwei die Schinkenkeule (4) tragende Schlitten (10) hat, die durch die Wirkung von zugehörigen Schlittenbetätigungsmitteln (3) wechselnd von einer Position, die einer der beiden Lade-/Abladestationen (100) entspricht, zu den Schneidstationen (200) transiatorisch bewegbar sind.

23. Maschine nach Anspruch 22, **dadurch gekennzeichnet, daß** die Schlitten (10) durch ein Paar Verbindungsstangen (10a) in Längsrichtung miteinander verbunden sind.

24. Maschine nach Anspruch 22, **dadurch gekennzeichnet, daß** die Schlittenbetätigungsmittel aus zwei Zylindern (3) bestehen, die parallel zu den Führungen (1a) der Schlitten (10) angeordnet sind.

25. Maschine nach Anspruch 1, **dadurch gekennzeichnet, daß** sie ferner Winkeleinstellmittel hat, die der Tragefläche (12) zugeordnet sind, um deren Winkel bezüglich der Referenzachse der Maschine einzustellen.

26. Maschine nach den Ansprüchen 1 und 25, **dadurch gekennzeichnet, daß** sie lichtaussendende Mittel zum Erfassen der Position des Oberschenkelknochens bezüglich der Referenzachse hat, die dazu dienen, Steuersignale für die Vorrichtungen zum Einstellen des Winkels der Fläche (12) in Abhängigkeit der tatsächlichen Position des Knochens relativ zu der Referenzachse abzugeben.

27. Maschine nach Anspruch 1, **dadurch gekennzeichnet, daß** sie eine Vorrichtung (30) zum Einstellen der mehr oder weniger vorgeschobenen Position der Schinkenkeule (4) auf der Tragefläche in einer Richtung parallel zur Achse des Knochens (5) hat, die aus einem Anschlagflansch besteht, der einstückig mit der Stange (32a) eines an dem Rahmen (1b) befestigten Zylinders (32) ist.

28. Verfahren zum Durchführen des Ausbeinschnitts am Knochen (5) von Schinkenkeulen (4) oder dergleichen mit einer Maschine nach einem der Ansprüche 1 bis 27, mit den folgenden Schritten:
- Tragen einer Schinkenkeule auf Tragemitteln an einer Station zum Laden/Abladen, wobei der Knochen an einer Orientierungsachse ausgerichtet ist, die mittels Ausrichtungseinstellmitteln gebildet wird;
- Anordnen der Tragemittel mit der darauf getragenen Schinkenkeule an einer Schneidstation, die Präge- und Schneidgruppen enthält;
- Durchführen einer Prägeoperation mit der Prägegruppe, die darin besteht, einen runden Einschnitt um den Endabschnitt (5a) des Knochens (5) herum auszuführen;
- Durchführen des Ausbeinschnitts mit den Schneidgruppen; und
- Abladen der bearbeiteten Schinkenkeule von den Tragemitteln,

## Revendications

1. Machine automatique pour réaliser le desossage sur l'os (5) de jambes de jambon (4) ou équivalent, comprenant un cadre (1) contenant au moins un poste de chargement (100) et au moins un poste de découpage (200) doté d'une pluralité de groupes de découpage (221, 222, 223, 224, 225, 226) pour découper la jambe de jambon (4), des moyens de support (12) pour supporter la jambe de jambon (4) qui peuvent être placés au poste de chargement/déchargement et/ou au poste de découpage et qui sont équipés de dispositifs (13, 14) pour retenir la jambe de jambon (4), **caractérisée en ce qu'**elle comprend en outre des moyens de réglage d'alignement (24) pour ajuster l'alignement de l'os (5) en formant un axe d'orientation le long duquel l'os (5) de la jambe de jambon est disposé pour appui auxdits moyens de support (12), ledit poste de découpage (200) étant en outre équipé d'un groupe d'impression (210) adapté pour des opérations d'impression.

2. Machine selon la revendication 1, **caractérisée en ce que** lesdits moyens (12) pour supporter la jambe de jambon (4) comprennent un chariot (10) supporté par des guides (1a) fixés au cadre de la machine.

3. Machine selon la revendication 2, **caractérisée en ce que** ledit chariot (10) est formé par une première surface (11) portant des moyens (11a) pour accouplement avec lesdits guides (1a) et par une deuxième surface (12) qui est parallèle à la première et mobile dans une direction perpendiculaire à celle-ci, à l'aide de l'action de moyens de manoeuvre (18), et qui agissent sur les moyens de support (12) supportant la jambe de jambon (4).

4. Machine selon la revendication 1 ou 3, **caractérisée en ce que** lesdits moyens de support pour supporter la jambe de jambon (4) comprennent ladite deuxième surface d'appui (12) à laquelle des moyens de manoeuvre (15, 15a) sont connectés pour actionner les dispositifs de retenue (13, 14) pour retenir la jambe de jambon.

5. Machine selon la revendication 1 ou 4, **caractérisée en ce que** lesdits dispositifs de retenue comprennent des plaques de retenue (13) qui sont équipées de dents (13a) s'étendant à partir de leur surface inférieure, lesdites plaques (13) étant montées en pivotement sur un pivot respectif (13b) encastré dans lesdits moyens de manoeuvre (15, 15a).

6. Machine selon la revendication 4 ou 5, **caractérisée en ce que** lesdits moyens de manoeuvre consistent en un vérin (15) fixé à la surface d'appui (12), dont la tige (15a) porte ledit pivot (13b).

7. Machine selon la revendication 3 ou 4, **caractérisée en ce que**, à ladite surface d'appui (12) d'autres moyens de retenue (16) sont associés pour retenir la jambe de jambon (4), comprenant des dents (16a) qui sont disposées à l'intérieur de sièges correspondants à l'intérieur de la surface d'appui (12) supportant la jambe de jambon et qui peuvent être actionnées en translation par l'intermédiaire des moyens de manoeuvre (17) d'une position rentrée à l'intérieur de ladite surface d'appui (12) à une position dépassant de la surface d'appui elle-même.

8. Machine selon la revendication 2 ou 3, **caractérisée en ce que** .ledit poste de chargement (100) est adapté pour agir comme poste de chargement/déchargement (100) qui comprend des moyens pour ajuster la hauteur de l'os (5) de la jambe de jambon par rapport à une surface de référence.

9. Machine selon la revendication 8, **caractérisée en ce que** lesdits moyens pour ajuster la hauteur de l'os (5) comprennent une lame (21) intégrée à la tige (22a) d'un vérin pneumatique (22) fixé à un guide vertical (1c) du cadre (1).

10. Machine selon la revendication 9, **caractérisée en ce que** ledit vérin pneumatique (22) est soumis à une pression équilibrée afin de permettre l'arrêt de la lame (21) lorsque celle-ci vient en contact avec le fémur (5).

11. Machine selon les revendications 3, 4, 6, 7 ou 9, **caractérisée en ce que** lesdits moyens pour ajuster la hauteur comprennent aussi un élément (23) pour détecter la position de la jambe de jambon, qui est destiné à transmettre un signal d'arrêt auxdits moyens de manoeuvre (18) effectuant la translation de la surface d'appui (12) supportant la jambe de jambon.

12. Machine selon la revendication 8, **caractérisée en ce que** lesdits moyens de réglage d'alignement (24) sont prévus audit poste de chargement/déchargement (100), ledit axe d'orientation étant substantiellement perpendiculaire à la direction des guides de support (1a) du chariot (12).

13. Machine selon la revendication 4 ou 12, **caractérisée en ce que** lesdits moyens d'alignement de l'os comprennent un émetteur de lumière de faible puissance (24) qui est intégré au cadre (1) et émet un faisceau lumineux qui est projeté sur la surface d'appui (12) supportant la jambe de jambon (4) afin de former ledit axe d'orientation.

14. Machine selon la revendication 8, **caractérisée en ce que** ledit poste de chargement/déchargement comprend des moyens (25) pour serrer la partie avant de la jambe de jambon (4).

15. Machine selon la revendication 14, **caractérisée en ce que** lesdits moyens de compression comprennent un piston (25) actionné de manière à exécuter une translation perpendiculaire à la surface (12) supportant la jambe de jambon par des moyens de manoeuvre associés (26).

16. Machine selon la revendication 1, **caractérisée en ce que** ledit poste de découpage (200) comprend une tête d'impression (212) et une pluralité de têtes de gougeage disposées par paires adaptées pour travailler alternativement afin d'éviter une interférence mutuelle.

17. Machine selon la revendication 16, **caractérisée en ce que** ladite tête d'impression est équipée d'une lame (212) qui est substantiellement cylindrique et creuse et actionnée afin d'exécuter une translation par des moyens de manoeuvre associés (213).

18. Machine selon la revendication 1 ou 17, **caractérisée en ce que** lesdits groupes de découpage comprennent respectivement une paire de têtes de gougeage supérieures (221, 222), une paire de têtes de gougeage inférieures (223, 224) et une paire de têtes de gougeage avant (225, 226).

19. Machine selon la revendication 18, **caractérisée en ce que** lesdites têtes de découpage sont inclinées de manière appropriée par rapport à l'axe d'orientation de l'os (5) de la jambe de jambon, plus précisément par rapport à l'axe de référence de la machine.

20. Machine selon la revendication 8, **caractérisée en ce que** ledit poste de chargement/déchargement (100) coïncide avec le poste de découpage (200).

21. Machine selon la revendication 8, **caractérisée en ce qu'**elle comprend deux postes de chargement/déchargement (100) disposés symétriquement sur les côtés opposés du poste de découpage (200).

22. Machine selon la revendication 8 ou 21, **caractérisée en ce qu'**elle comprend une paire de chariots (10) supportant la jambe de jambon (4), qui sont mobiles en translation alternativement d'une position correspondant à un des deux postes de chargement/déchargement (100) aux postes de découpage (200) au moyen de l'action des moyens de manoeuvre de chariots associés (3).

23. Machine selon la revendication 22, **caractérisée en ce que** lesdits chariots (10) sont reliés entre eux dans la direction longitudinale par une paire de tiges de liaison (10a).

24. Machine selon la revendication 22, **caractérisée en ce que** lesdits moyens de manoeuvre de chariots comprennent une paire de vérins (3) qui sont placés parallèlement aux guides (1a) des chariots (10).

25. Machine selon la revendication 1, **caractérisée en ce qu'**elle comprend en outre des moyens de réglage angulaire, associés à ladite surface de support (12) pour son réglage angulaire par rapport à l'axe de référence de la machine.

26. Machine selon les revendications 1 et 25, **caractérisée en ce qu'**elle comprend des moyens d'émission de lumière pour détecter la position du fémur par rapport à l'axe de référence, qui sont construits pour transmettre des signaux de commande pour lesdits dispositifs de réglage angulaire de la surface (12), selon la position actuelle de l'os par rapport audit axe de référence.

27. Machine selon la revendication 1, **caractérisée en ce qu'**elle comprend un dispositif (30) pour régler la position plus ou moins avancée de la jambe de jambon (4) sur la surface du support dans une direction parallèle à l'axe de l'os (5), qui comprend un flasque d'appui intégré à la tige (32a) d'un vérin (32) fixé au cadre (1b).

28. Procédé pour réaliser le desossage sur l'os (5) de jambes de jambon (4) ou équivalent exécuté sur une machine selon l'une quelconque des revendications 1 à 27, comprenant les étapes de :
- supporter une jambe de jambon, à un poste de chargement/déchargement, sur des moyens de support avec l'os aligné suivant un axe d'orientation formé à l'aide de moyens de réglage d'alignement;
- disposer lesdits moyens de support supportant ladite jambe de jambon à un poste de découpage comprenant des groupes d'impression et de découpage;
- réaliser une opération d'impression avec ledit groupe d'impression qui consiste à exécuter une incision circulaire autour de la partie finale (5a) de l'os (5);
- exécuter le découpage de l'os à l'aide desdits groupes de découpage; et
- décharger la jambe de jambon traitée desdits moyens de support.
